# EUROPÄISCHE PATENTSCHRIFT

(11) **EP 3 816 968 B1**
(45) Veröffentlichungstag und Bekanntmachung des Hinweises auf die Patenterteilung: **01.05.2024**
(21) Anmeldenummer: 20202681.1
(22) Anmeldetag: 20.10.2020
(51) Int. Cl.: G08G 1/16, B60W 50/14, B60W 30/095

(54) **VERFAHREN ZUM ÜBERWACHEN EINER UMGEBUNG EINES FAHRZEUGS UND SYSTEM ZUM ÜBERWACHEN EINER UMGEBUNG EINES FAHRZEUGS**
METHOD FOR MONITORING AN ENVIRONMENT OF A VEHICLE AND SYSTEM FOR MONITORING AN ENVIRONMENT OF A VEHICLE
PROCÉDÉ DE SURVEILLANCE D'UN ENVIRONNEMENT D'UN VÉHICULE ET SYSTÈME DE SURVEILLANCE DE L'ENVIRONNEMENT D'UN VÉHICULE

(30) Priorität: 29.10.2019 DE 102019216598
(43) Veröffentlichungstag der Anmeldung: 05.05.2021
(73) Patentinhaber: Deere & Company, Moline, IL 61265 (US)
(72) Erfinder: Ikic, Davorin, 70378 Stuttgart (DE); Schleweis, Nico, 74199 Donnbronn (DE); Reinmuth, Florian, 74889 Sinsheim (DE); Galvez Castillo, Rocio, 74523 Schwäbisch Hall (DE); Walther, Roman, 71636 Ludwigsburg (DE); Kauker, Stephanie, 71282 Hemmingen (DE)
(74) Vertreter: Dehnhardt, Florian Christopher

(56) Entgegenhaltungen:
- WO-A1-2019/187883
- DE-A1-102011 010 864
- DE-A1-102011 115 875
- DE-A1-102012 216 386
- DE-A1-102013 100 206
- US-A1- 2011 125 372

## Beschreibung

Die vorliegende Erfindung betrifft ein Verfahren zum Überwachen einer Umgebung eines als Traktor ausgebildeten Fahrzeugs.

Bei Fahrassistenzsystemen kommen Sensoren zur aktiven Überwachung der Umgebung und der Verkehrslage zum Einsatz. Landwirtschaftliche oder Baumaschinen können durch mehrere und unterschiedliche Sensoren für deren Handhabung, insbesondere mit großen Anhängern, im Straßenverkehr unterstützt werden. Aus dem Bereich der PKWs sind verschiedenste Assistenzsysteme bekannt um statische als auch bewegliche Objekte zu erkennen, beispielsweise Objekte in einem toten Winkel oder ein adaptives Geschwindigkeitsregeltempomat. Üblicherweise werden akustische oder visuelle Warnungen an den Fahrer erzeugt. Dabei können Parameter wie eine zu erwartende Kollisionszeit (time to collision ttc), etwa wenn weder Fahrzeug noch Gegenfahrzeug oder Objekt vorher in deren Fahrtrajektorie beeinflusst werden, eine Fahrzeuggeschwindigkeit, eine Position und ein Abstand des Objekts oder des Fahrzeugs ermittelt werden. Übliche Assistenzsysteme verwenden rein bildgebende Verfahren (beispielsweise SATCON Quer-Kamera-Monitor-System).

In der DE 11 2012 000 466 B4 wird ein System und ein Verfahren zum Manövrieren eines Fahrzeug-Anhänger-Gespanns beschrieben.

Des Weiteren geht aus der WO 2019/187883 A1 ein System zur Hinderniserkennung für einen landwirtschaftlichen Traktor hervor, das der Vermeidung von Kollisionen des landwirtschaftlichen Traktors mit in einem Arbeitsbereich befindlichen Hindernissen dient. Hierbei umfasst eine Sensoranordnung eine Vielzahl von Ultraschallsensoren, die entlang der Seiten des landwirtschaftlichen Traktors verteilt angeordnet sind. Eine Kontrolleinheit ermittelt hierbei den Abstand gegenüber einem in den Erfassungsbereich der Sensoren eintretenden Objekt, um vom aktuellen Bewegungszustand des landwirtschaftlichen Traktors abhängige Kollisionsvermeidungsmaßnahmen einzuleiten.

Die vorliegende Erfindung schafft ein Verfahren zum Überwachen einer Umgebung eines als Traktor ausgebildeten Fahrzeugs nach Anspruch 1.

Bevorzugte Weiterbildungen sind Gegenstand der Unteransprüche.

Die der vorliegenden Erfindung zugrunde liegende Idee besteht darin, ein Verfahren zum Überwachen einer Umgebung eines als Traktor ausgebildeten Fahrzeugs anzugeben, welches den Fahrer bei Verkehrslagen unterstützen kann und eine Handhabe des Fahrzeugs im Verkehr erleichtern kann.

Erfindungsgemäß erfolgt bei dem Verfahren zum Überwachen einer Umgebung eines als Traktor ausgebildeten Fahrzeugs ein Erfassen eines Objekts in einer Umgebung des Fahrzeugs durch zumindest eine Sensoreinrichtung; ein Ermitteln einer Kollisionswahrscheinlichkeit des Fahrzeugs mit dem Objekt durch eine Auswerteeinrichtung basierend auf Sensordaten von der Sensoreinrichtung, wobei zumindest ein Bewegungsparameter des Fahrzeugs, zumindest ein Fahrzeugparameter und zumindest ein Bewegungsparameter des Objekts berücksichtigt wird; und ein Anzeigen einer Empfehlung zum Weiterfahren oder Anhalten des Fahrzeugs in Abhängigkeit von der ermittelten Kollisionswahrscheinlichkeit an einer Anzeigevorrichtung. Hierbei weist das Fahrzeug einen Vorbau für landwirtschaftliche Maschinenaufsätze auf, welcher an einem in Fahrtrichtung vorderen Ende des Fahrzeugs angebracht ist, wobei die Sensoreinrichtung zumindest nach rechts und links von der Vorwärtsfahrtrichtung des Fahrzeugs an dem Vorbau für landwirtschaftliche Maschinenaufsätze angeordnet ist, um einen Fahrer des Fahrzeugs zur Einsicht in einen Kreuzungs- oder Abbiegebereich zu unterstützen, der Bewegungsparameter des Fahrzeugs eine Fahrtrajektorie und/oder eine Beschleunigung des Fahrzeugs und/oder eine Fahrtgeschwindigkeit des Fahrzeugs und/oder eine erzielbare Bremskraft des Fahrzeugs umfasst, der Fahrzeugparameter eine Fahrzeugmasse und/oder eine Fahrzeuglänge und/oder eine Fahrzeugbreite und/oder einen Wendekreis und/oder ein Fahrzeuggewicht umfasst, der Bewegungsparameter des Objekts eine Bewegungsgeschwindigkeit des Objekts umfasst, und die Kollisionswahrscheinlichkeit in Abhängigkeit von einer Fahrtrajektorie des Fahrzeugs und einer Bewegungstrajektorie des Objekts ermittelt wird und bei einem ermittelten Schnittpunkt der Fahrtrajektorie mit der Bewegungstrajektorie die Kollisionswahrscheinlichkeit als hoch angezeigt wird.

Bei dem Objekt kann es sich um verschiedenste Objekte im Straßenverkehr oder in landwirtschaftlichen Bereichen handeln, beispielsweise um Personen, Gebäude, Fahrzeuge, Tiere oder Ähnliches. Das Fahrzeug kann auch einen oder mehrere Anhänger aufweisen. Die Kollisionswahrscheinlichkeit kann vorteilhaft einem Fahrer angezeigt werden, um das Risiko von Kollisionen zu verringern, vorteilhaft in unübersichtlichen Kreuzungs-, Ein- Ausfahrts- und/oder Hofbereichen. Der Fahrer kann bei unübersichtlichen Bereichen in seiner Entscheidung unterstützt werden, wann ein Abbiegen oder ein Ein- oder Ausfahren aus einer Einfahrt möglich ist oder mit einem möglichst geringen Risiko für andere Verkehrsteilnehmer verbunden sein kann.

Der Fahrer kann so eine Unterstützung zur Einsicht in den Kreuzungs- oder Abbiegebereich erfahren, was besonders bei schlechten Witterungsbedingungen und verringerter Rundumsicht oder bei Gischt oder starker Sonneneinstrahlung eine verbesserte Einschätzung der Verkehrssituation ermöglichen kann. So können auch Objekte oder Fahrzeuge mit einer hohen Relativgeschwindigkeit zum Fahrzeug und kompakten Ausmaßen besser erkannt werden und deren Bewegungsverlauf abgeschätzt werden, beispielsweise Motorräder.

Die Sensoreinrichtung kann vorteilhaft Radar und/oder eine oder mehrere Kameras umfassen und als ein Systemverbund am Vorbau des Fahrzeugs angeordnet sein. Des Weiteren kann die Sensoreinrichtung auch weitere Sensortechnologien umfassen, etwa Lidar oder bildgebende Kameras.

Die Anzeigevorrichtung kann mit mehreren Sensoreinrichtungen zusammengeschaltet sein. Somit kann eine Kombination mehrerer Displays, etwa an jeder Seite vom Fahrer aus gesehen ein Display, an der Fahrerkabine angeordnet sein.

So kann beispielsweise in Fahrtrichtung auf dem Vorbau ein linksseitiges Radar und eine linksseitige Kamera angeordnet sein und mit einem linksseitigen Display verbunden sein und vorteilhaft nur die linksseitige Verkehrslage anzeigen. Des Weiteren kann in Fahrtrichtung auf einem Frontaufbau ein rechtsseitiges Radar und eine rechtsseitige Kamera angeordnet sein und mit einem rechtsseitigen Display verbunden sein und vorteilhaft nur die rechtsseitige Verkehrslage anzeigen.

Die Displays können über ein Bussystem miteinander verbunden sein, ebenso die Kameras und Displays durch ein Ethernet/LVDS, die Radarsensoren(kameras) mit dem Display durch einen (automotive ) CAN und mit einem Gateway / IMU über einen Bus, etwa einen ISOBUS verbunden sein, wobei der Gateway mit einem ISOBUS mit den Displays verbunden sein kann (EE-Architektur).

Die Beschleunigung des Fahrzeugs kann auch einer Fähigkeit zu Beschleunigung und der Frage nach einem erfolgten Beschleunigungskommando entsprechen.

Gemäß einer bevorzugten Ausführungsform des Verfahrens wird eine Kollisionszeit relativ zu einer Position des Fahrzeugs und die Position des Fahrzeugs ermittelt.

Durch die Sensorinformationen kann vorteilhaft eine potentielle Bremszeit berechnet werden und dazu noch eine Reaktionszeit des Fahrers, des Fahrzeugs und/oder des Objekts, berücksichtigt werden und die Möglichkeit für eine Notbremsung ermittelt werden um eine Kollision zu vermeiden. Dabei kann stets eine fiktive Kollisionszeit ermittelt werden, welche fortlaufend die Zeit bis zu einer Kollision anzeigt, falls die momentanen Fahrt- und/oder Bewegungsbedingungen von Fahrzeug und/oder Objekt beibehalten werden. Ausgehend von dieser Zeit können dann mögliche Reaktionsszenarien beurteilt werden, vorteilhaft basierend auf deren Effekt auf die Bewegung des Fahrzeugs.

Gemäß einer bevorzugten Ausführungsform des Verfahrens wird die Kollisionswahrscheinlichkeit an der Anzeigevorrichtung farblich angezeigt.

Gemäß einer bevorzugten Ausführungsform des Verfahrens wird die Kollisionswahrscheinlichkeit an der Anzeigevorrichtung angezeigt und mit einem visuellen Kamerabild der Umgebung überlagert.

An der Anzeigevorrichtung kann vorteilhaft auch ein Kollisionswert zusammen mit der jeweiligen Farbe der Kollisionswahrscheinlichkeit angezeigt werden. Beispielsweise kann der Kollisionswert auf einer Skala zwischen 1 und 10 variieren, wobei der grüne Bereich zwischen 1 und 3, der orange Bereich zwischen 4 und 6 und der rote Bereich zwischen 7 und 10 angezeigt werden kann. Durch ein überlagertes Bild kann ein verbesserter Eindruck von der Verkehrssituation entstehen. Das Objekt und dessen Bewegung kann in der Anzeige durch eine Pfeildarstellung angezeigt werden.

Die farblichen Anzeigen können als eine Ampel beispielsweise in oder außen an der Fahrerkabine auf Höhe der Außenspiegel neben diesen angebracht sein, vorzugsweise an jeder Seite jedem Seitenspiegel eine dieser Ampeln. Zusätzlich kann auch ein entsprechendes akustisches Warnsignal ausgegeben werden, etwa jeweils unterschiedlich für den grünen, orangen und roten Bereich.

Weitere Merkmale und Vorteile von Ausführungsformen der Erfindung ergeben sich aus der nachfolgenden Beschreibung mit Bezug auf die beigefügten Zeichnungen.

Die vorliegende Erfindung wird nachfolgend anhand der in den schematischen Figuren der Zeichnung angegebenen Ausführungsbeispiele näher erläutert.

Es zeigen:
- Fig. 1: eine schematische Ansicht eines Fahrzeugs mit einem Anhänger mit einem System zum Überwachen einer Umgebung des Fahrzeugs gemäß einem Ausführungsbeispiel der vorliegenden Erfindung;
- Fig. 2: eine Verkehrssituation für die Anwendung des erfindungsgemäßen Systems zum Überwachen einer Umgebung des Fahrzeugs;
- Fig. 3: eine weitere Verkehrssituation für die Anwendung des erfindungsgemäßen Systems und des erfindungsgemäßen Verfahrens; und
- Fig. 4: eine Blockdarstellung von Verfahrensschritten des Verfahrens zum Überwachen einer Umgebung eines Fahrzeugs gemäß einem Ausführungsbeispiel der vorliegenden Erfindung.

In den Figuren bezeichnen gleiche Bezugszeichen gleiche bzw. funktionsgleiche Elemente.

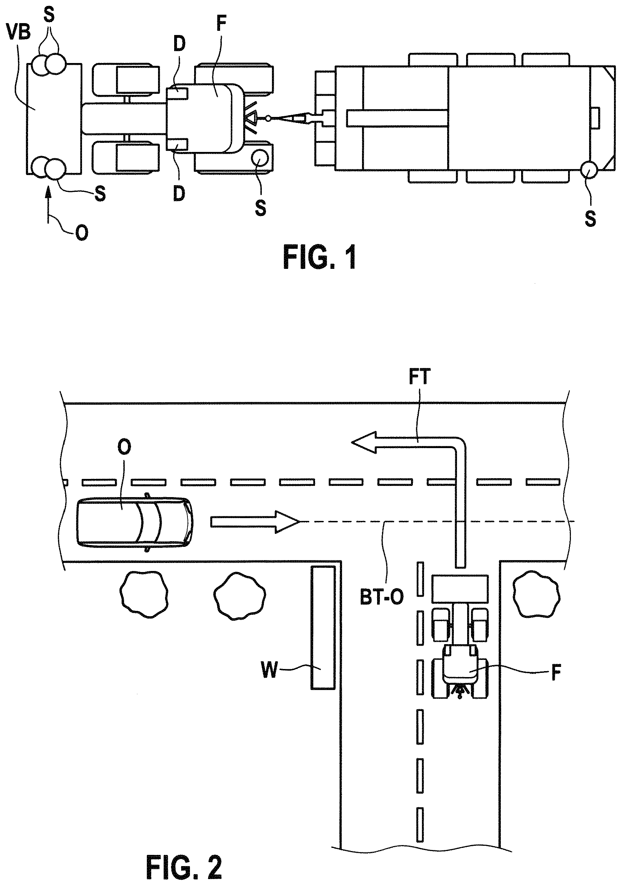

Fig. 1 zeigt eine schematische Ansicht eines Fahrzeugs mit einem Anhänger mit einem System zum Überwachen einer Umgebung des Fahrzeugs gemäß einem Ausführungsbeispiel der vorliegenden Erfindung.

Das Fahrzeug F umfasst vorteilhaft ein System 1 zum Überwachen einer Umgebung des Fahrzeugs F umfassend eine Sensoreinrichtung S, welche an dem Fahrzeug F angebracht ist und dazu eingerichtet ist, ein Objekt O in einer Umgebung des Fahrzeugs F zu erfassen; eine Auswerteeinrichtung, welche dazu eingerichtet ist, eine Kollisionswahrscheinlichkeit des Fahrzeugs F mit dem Objekt O basierend auf Sensordaten von der Sensoreinrichtung S zu ermitteln, wobei zumindest ein Bewegungsparameter des Fahrzeugs F, zumindest ein Fahrzeugparameter und zumindest ein Bewegungsparameter des Objekts O berücksichtigbar ist; und eine Anzeigevorrichtung D, welche dazu eingerichtet ist eine Empfehlung zum Weiterfahren oder Anhalten des Fahrzeugs F in Abhängigkeit von der ermittelten Kollisionswahrscheinlichkeit anzuzeigen. Die Sensoreinrichtung S ist dabei an einem Vorbau VB angeordnet, welcher an einem in Fahrtrichtung vorderen Ende des Fahrzeugs F angebracht ist. Des Weiteren ist es möglich, dass die Sensoreinrichtung S zusätzlich zur Anordnung am Vorbau auch am Fahrzeugheck und/oder an einem Heckimplement und/oder an einem Anhänger angebracht sein kann.

Ein Objekt O kann sich von einer rechten oder linken Seite nähern (Pfeildarstellung) und von der Sensoreinrichtung erfasst werden.

Fig. 2 zeigt eine Verkehrssituation für die Anwendung des erfindungsgemäßen Systems zum Überwachen einer Umgebung des Fahrzeugs.

Das Fahrzeug F kann an einem Kreuzungsbereich zum Stehen kommen und für ein Abbiegen nach links kann durch das System der Kreuzungsbereich und eine drohende Kollision mit einem Objekt überwacht werden. Ein Objekt O kann hierbei ein weiteres Fahrzeug sein, dessen Bewegungstrajektorie BT-O die Fahrtrajektorie FT des Fahrzeugs F im Kreuzungsbereich schneiden kann, wenn das Objekt dieselbe Fahrtrichtung beibehält. Dies kann insbesondere vorteilhaft sein, wenn die Sicht auf den Kreuzungsbereich und den weiteren Straßenverlauf beeinträchtigt ist, etwa durch eine Wand W. Das System kann durch die Bewegungs- und Fahrzeugparameter eine mögliche Kollisionszeit ermitteln und dadurch eine Empfehlung anzeigen, ob das Abbiegen mit geringer oder hoher Kollisionswahrscheinlichkeit schaffbar ist.

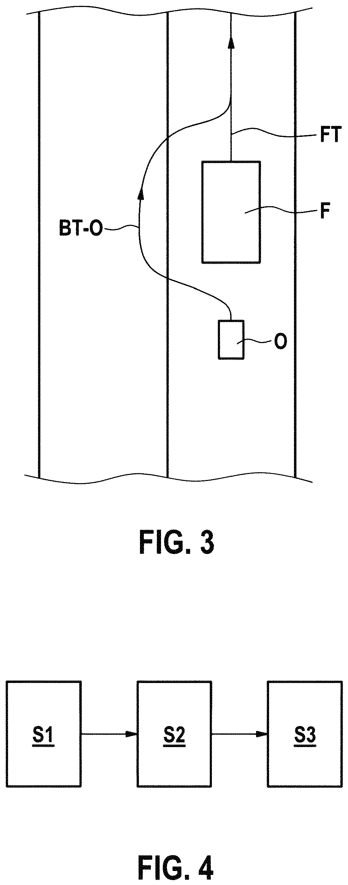

Fig. 3 zeigt eine weitere Verkehrssituation für die Anwendung des erfindungsgemäßen Systems und des erfindungsgemäßen Verfahrens.

In der Verkehrssituation der Fig. 3 kann ein Objekt O, etwa ein weiteres Fahrzeug, das Fahrzeug F auf einer Fahrbahn seitlich überholen und wieder vor diesem einscheren. Hierbei kann durch das erfindungsgemäße Verfahren die mögliche Kollisionswahrscheinlichkeit in Abhängigkeit von einer Fahrtrajektorie FT des Fahrzeugs und einer Bewegungstrajektorie BT-O des Objekts ermittelt werden und bei einem ermittelten Schnittpunkt der Fahrtrajektorie FT mit der Bewegungstrajektorie BT-O in eine Richtung zum Objekt hin die Kollisionswahrscheinlichkeit als hoch angezeigt werden oder bei einem Überholvorgang des Fahrzeugs durch das Objekt die Kollisionswahrscheinlichkeit als durchschnittlich angezeigt werden wenn in naher Zukunft kein Schnittpunkt der Trajektorien und keine Blinkerbetätigung des Fahrzeugs in Richtung des Objekts erfolgt.

Fig. 4 zeigt eine Blockdarstellung von Verfahrensschritten des Verfahrens zum Überwachen einer Umgebung eines Fahrzeugs gemäß einem Ausführungsbeispiel der vorliegenden Erfindung.

Bei dem Verfahren zum Überwachen einer Umgebung eines Fahrzeugs erfolgt ein Erfassen S1 eines Objekts in einer Umgebung des Fahrzeugs durch zumindest eine Sensoreinrichtung; ein Ermitteln S2 einer Kollisionswahrscheinlichkeit des Fahrzeugs mit dem Objekt durch eine Auswerteeinrichtung basierend auf Sensordaten von der Sensoreinrichtung, wobei zumindest ein Bewegungsparameter des Fahrzeugs, zumindest ein Fahrzeugparameter und zumindest ein Bewegungsparameter des Objekts berücksichtigt wird; und ein Anzeigen S3 einer Empfehlung zum Weiterfahren oder Anhalten des Fahrzeugs in Abhängigkeit von der ermittelten Kollisionswahrscheinlichkeit an einer Anzeigevorrichtung.

## Patentansprüche

1. Verfahren zum Überwachen einer Umgebung eines als Traktor ausgebildeten Fahrzeugs (F), wobei das Fahrzeug (F) einen Vorbau (VB) für landwirtschaftliche Maschinenaufsätze aufweist, welcher an einem in Fahrtrichtung vorderen Ende des Fahrzeugs (F) angebracht ist, umfassend die Schritte:
- Erfassen (S1) eines Objekts (O) in einer Umgebung des Fahrzeugs (F) durch zumindest eine Sensoreinrichtung (S);
- Ermitteln (S2) einer Kollisionswahrscheinlichkeit des Fahrzeugs (F) mit dem Objekt (O) durch eine Auswerteeinrichtung basierend auf Sensordaten von der Sensoreinrichtung (S), wobei zumindest ein Bewegungsparameter (BP-F) des Fahrzeugs (F), zumindest ein Fahrzeugparameter und zumindest ein Bewegungsparameter des Objekts (O) berücksichtigt wird; und
- Anzeigen (S3) einer Empfehlung zum Weiterfahren oder Anhalten des Fahrzeugs (F) in Abhängigkeit von der ermittelten Kollisionswahrscheinlichkeit an einer Anzeigevorrichtung (D),
wobei die Sensoreinrichtung (S) zumindest nach rechts und links von der Vorwärtsfahrtrichtung des Fahrzeugs (F) an dem Vorbau (VB) für landwirtschaftliche Maschinenaufsätze angeordnet ist, um einen Fahrer des Fahrzeugs (F) zur Einsicht in einen Kreuzungs- oder Abbiegebereich zu unterstützen, der Bewegungsparameter des Fahrzeugs (F) eine Fahrttrajektorie und/oder eine Beschleunigung des Fahrzeugs (F) und/oder eine Fahrtgeschwindigkeit des Fahrzeugs (F) und/oder eine erzielbare Bremskraft des Fahrzeugs umfasst, der Fahrzeugparameter eine Fahrzeugmasse und/oder eine Fahrzeuglänge und/oder eine Fahrzeugbreite und/oder einen Wendekreis und/oder ein Fahrzeuggewicht umfasst, der Bewegungsparameter des Objekts (O) eine Bewegungsgeschwindigkeit des Objekts umfasst, und die Kollisionswahrscheinlichkeit in Abhängigkeit von einer Fahrtrajektorie des Fahrzeugs und einer Bewegungstrajektorie des Objekts ermittelt wird und bei einem ermittelten Schnittpunkt der Fahrtrajektorie mit der Bewegungstrajektorie die Kollisionswahrscheinlichkeit als hoch angezeigt wird.

2. Verfahren nach Anspruch 1, bei welchem eine mögliche Kollisionszeit (TTC) relativ zu einer Position des Fahrzeugs und die Position des Fahrzeugs ermittelt wird.

3. Verfahren nach Anspruch 2, bei welchem die Kollisionswahrscheinlichkeit an der Anzeigevorrichtung (D) farblich angezeigt wird.

4. Verfahren nach Anspruch 3, bei welchem die Kollisionswahrscheinlichkeit an der Anzeigevorrichtung (D) angezeigt wird und mit einem visuellen Kamerabild der Umgebung überlagert wird.

## Claims

1. Method for monitoring surroundings of a vehicle (F) embodied as a tractor, wherein the vehicle (F) has a front attachment means (VB) for agricultural machine attachments, which front attachment means is mounted on a front end of the vehicle (F) in a direction of travel, comprising the following steps:
- detecting (S1) an object (O) in surroundings of the vehicle (F) by way of at least one sensor device (S);
- determining (S2) a likelihood of collision between the vehicle (F) and the object (O) by way of an evaluation device based on sensor data from the sensor device (S), wherein at least one motion parameter (BP-F) of the vehicle (F), at least one vehicle parameter and at least one motion parameter of the object (O) is taken into consideration; and
- displaying (S3) a recommendation to carry on driving or to stop the vehicle (F) on the basis of the determined likelihood of collision on a display apparatus (D), wherein the sensor device (S) is arranged on the front attachment means (VB) for agricultural machine attachments at least to the right and to the left of the forward direction of travel of the vehicle (F) in order to assist a driver of the vehicle (F) with regard to a view of a junction or turning area, the motion parameter of the vehicle (F) comprises a driving trajectory and/or an acceleration of the vehicle (F) and/or a travel speed of the vehicle (F) and/or an achievable braking force of the vehicle, the vehicle parameter comprises a vehicle mass and/or a vehicle length and/or a vehicle width and/or a turning circle and/or a vehicle weight, the motion parameter of the object (O) comprises a speed of movement of the object, and the probability of collision is determined on the basis of a driving trajectory of the vehicle and a motion trajectory of the object and, if the driving trajectory is determined as intersecting the motion trajectory, the probability of collision is displayed as being high.

2. Method according to Claim 1, in which a possible time to collision (TTC) relative to a position of the vehicle and the position of the vehicle is determined.

3. Method according to Claim 2, in which the likelihood of collision is displayed in colour on the display apparatus (D).

4. Method according to Claim 3, in which the likelihood of collision is displayed on the display apparatus (D) and is overlaid with a visual camera image of the surroundings.

## Revendications

1. Procédé de surveillance d'un environnement d'un véhicule (F) réalisé sous la forme d'un tracteur, le véhicule (F) possédant un avant-corps (VB) pour des éléments rapportés de machines agricoles, lequel est montée sur une extrémité avant du véhicule (F) dans le sens de la marche, comprenant les étapes suivantes :
- détection (S1) d'un objet (O) dans un environnement du véhicule (F) par au moins un dispositif de détection (S) ;
- détermination (S2) d'une probabilité de collision du véhicule (F) avec l'objet (O) par un dispositif d'évaluation sur la base de données de capteur provenant du dispositif de détection (S), au moins un paramètre de mouvement (BP-F) du véhicule (F), au moins un paramètre de véhicule et au moins un paramètre de mouvement de l'objet (O) étant pris en compte ; et
- affichage (S3), sur un dispositif d'affichage (D), d'une recommandation de poursuite du déplacement ou d'arrêt du véhicule (F) en fonction de la probabilité de collision déterminée,
le dispositif de détection (S) étant disposé au moins vers la droite et la gauche par rapport au sens de la marche avant du véhicule (F) sur l'avant-corps (VB) pour des éléments rapportés de machines agricoles, afin d'assister un conducteur du véhicule (F) à visualiser une zone d'intersection ou de changement de direction, le paramètre de mouvement du véhicule (F) comportant une trajectoire de déplacement et/ou une accélération du véhicule (F) et/ou une vitesse de véhicule du véhicule (F) et/ou une force de freinage pouvant être atteinte du véhicule, le paramètre de véhicule comportant une masse de véhicule et/ou une longueur de véhicule et/ou une largeur de véhicule et/ou un rayon de braquage et/ou un poids de véhicule, le paramètre de mouvement de l'objet (O) comportant une vitesse de mouvement de l'objet, et la probabilité de collision étant déterminée en fonction d'une trajectoire de déplacement du véhicule et d'une trajectoire de mouvement de l'objet et la probabilité de collision étant indiquée élevée dans le cas d'un point d'intersection déterminé de la trajectoire de déplacement avec la trajectoire de mouvement.

2. Procédé selon la revendication 1, un moment de collision possible (TTC) par rapport à une position du véhicule ainsi que la position du véhicule étant déterminés.

3. Procédé selon la revendication 2, la probabilité de collision étant affichée en couleur sur le dispositif d'affichage (D).

4. Procédé selon la revendication 3, la probabilité de collision étant affichée sur le dispositif d'affichage (D) et étant superposée à une image de caméra visuelle de l'environnement.
